# EUROPEAN PATENT APPLICATION

(11) **EP 0 926 516 A1**
(43) Date of publication of application: **30.06.1999**
(21) Application number: 98911194.3
(22) Date of filing: 03.04.1998
(51) Int. Cl.: G02B 6/00, H01B 17/00

(54) **ORGANIC INSULATING DEVICE WITH BUILT-IN OPTICAL FIBER AND MANUFACTURING METHOD THEREFOR**

(30) Priority: 03.07.1997 JP 17871197; 02.03.1998 JP 4953098
(71) Applicant: NGK INSULATORS, LTD., Nagoya-City, Aichi Prefecture 467-8530 (JP)
(72) Inventor: TANAKA, Naoki, Kuwana-shi, Mie-ken 511-0002 (JP); KAWANISHI, Yoshihiro, Nagoya-shi, Aichi-ken 454-0862 (JP); TAKEUCHI, Isamu, Nagoya-shi, Aichi-ken 467-0827 (JP); UTSUMI, Yusuke-312 Gou,Royal Chateau Naruoka, Nagoya-shi, Aichi-ken 458-0005 (JP); YOKOI, Seigo, Ama-gun, Aichi-ken 411 (JP); TAKEDA, Takayuki, Handa-shi, Aichi-ken 475-0836 (JP); MIZUNO, Seiichi, Nagoya-shi, Aichi-ken 475-0836 (JP)
(74) Representative: Pellmann, Hans-Bernd, Dipl.-Ing.
(86) International application number: JP9801543
(87) International publication number: WO9901789

(57) **Abstract**

An object of the present invention is directed to prevent the occurrence of voids and micro-bend in an organic insulator device with an optical waveguide contained therein and to eliminate a difference of light transmission characteristic of the insulator device caused by a difference in length of the optical waveguide wound onto a support body. In the insulator device, optical waveguides 14 are spirally wound onto a cylindrical or columnar support body 11 mutually in a reverse direction in a condition where they were retained at a central portion of the support body 11, and the optical waveguides 14 are adhered to the outer periphery of the support body through an adhesive agent layer 17a in a condition where the optical waveguides 14 were fully covered with the adhesive agent. The opposite end portions of the optical waveguides are extended outwardly in a liquid-tight manner through mounting flanges 12, 13 secured to the opposite ends of the support body 11.

## Description

### Field of the Invention

The present invention relates to an organic insulator device with optical waveguides contained therein.

### Technical Background

In recent years, optical waveguides in the form of glass fibers are utilized in an optical measurement apparatus for optically detecting voltage, electric current and temperature at the high-voltage side of a high-voltage electric facility such as a power plant, a transformer substation, an open-shut station and the like, wherein the optical waveguides are used as a transmission path for transmitting measurement information indicative of the detected voltage, electric current and temperature as optical signals.

In the case that the optical waveguides are connected between the high-voltage side and the measurement side in the outdoors for transmitting the measurement information as optical signals, the outer layer of the optical waveguide cable will be damaged due to rain, dirt, etc. adhered thereto, and internal flashover will occur due to absorption of atmospheric humidity, resulting in obstacle to stable supply of the electric power. For this reason, there has been developed an organic insulator device with the optical waveguides contained therein such as a ceramic insulator with an optical waveguide contained therein or an organic insulator of organic insulation material with an optical waveguide contained therein. An example of the organic insulator device is disclosed in U.S. Patent No. 4,802,731.

The organic insulator device disclosed in the U.S. Patent comprises a cylindrical or columnar support element of fiber-reinforced plastic, an optical waveguide such as glass fibers arranged along the outer periphery of the support element and connected to the high-voltage side at one end thereof and to the measurement side at the other end thereof, and an outer layer of insulation elastic material adhered to the outer periphery of the support element to envelope the optical waveguide. In such an organic insulator device described above, the optical waveguide is spirally wound onto the outer periphery of the support element so that the length of the optical waveguide in an axial direction of the support element or the effective insulation length of the support element is increased to moderate the intensity of electric field applied thereto. The optical waveguide is adhered to the outer periphery of the support element with an elastic material such as silicon rubber during molding process of the outer insulation layer.

In the organic insulator device, there are two problems to be solved. The first problem is deterioration of the insulator device due to corona discharge caused by presence of voids such as bubbles or pores near the optical waveguides between the support element and outer insulation layer. The second problem is a difference in light transmission characteristic of the device caused by a difference in length of the optical waveguides wound onto the support element.

To solve the first problem, it is required to possibly eliminate the bubbles or pores formed along the optical waveguides between the support element and outer insulation layer. However, in the case that the optical waveguide is adhered to the outer periphery of the support element with the elastic material during molding process of the outer insulation layer, there occur countless voids along the optical waveguide due to difficulty in molding the elastic material into a clearance between the optical waveguide and the outer periphery of the support body. It is, therefore, desirable that the molding process of the outer insulation layer is carried out under reduced pressure to prevent the occurrence of voids. In such a case, however, a large size vacuum device or pressure reduction device is needed to provide a reduced pressure atmosphere. In addition, if the optical waveguide is being applied with winding tension during the molding process of the outer insulation layer under reduced pressure, it is impossible to prevent the occurrence of voids. If the optical waveguide is wound onto the support element with low tension to avoid the problem, the optical waveguide is applied with local bending force caused by thermal contraction after the molding process of the outer insulation layer. This results in the occurrence of fine bends so called micro-bending. The presence of micro-bending decreases a transmission amount of light.

To solve the second problem, it is required that the optical waveguide is wound onto the support element at a predetermined gradient angle and at a predetermined pitch to determine the length of the optical waveguide taking into account moderation of the electric field of the optical waveguide. Such winding operation of the optical waveguide is difficult to a skilled workman. For this reason, it has been proposed to form a spiral groove on the outer periphery of the support element for winding the optical waveguide therein. The formation of the spiral groove is not so easy for the operator and results in an increase of the manufacturing cost.

It is, therefore, a primary object of the present invention to prevent the occurrence of voids such as bubbles or pores along the optical waveguide between the support body and the outer insulation layer. A secondary object of the present invention is to eliminate a difference of light transmission characteristic of the insulator device caused by a difference in length of the optical waveguide wound onto the support body.

### Disclosure of the Invention

The present invention is adapted to an organic insulator device with an optical waveguide contained therein of the type which includes a cylindrical or columnar support body of reinforced plastic, an optical waveguide arranged along th outer periphery of the support body and extended from one end of the support body to the other end of the support body for connection to a high-voltage side and a measurement side, and an outer insulation layer of elastic material integrally formed on the outer periphery of the support body to envelope the optical waveguide. The organic insulator device is characterized in that the optical waveguide is spirally wound onto the support body and adhered to the outer periphery of the support body through an adhesive agent in a condition where the optical waveguide was fully covered with the adhesive agent. In a preferred embodiment of the present invention, the optical waveguide is spirally wound on the support body mutually in a reverse direction in a condition where it is
retained at a central portion of the support body and is adhered to the outer periphery of the support body.

In the insulator device according to the present invention, the optical waveguide is completely enveloped by the adhesive agent and adhered to the outer periphery of the support body through the adhesive agent layer. Thus, the outer insulation layer can be integrally formed on the outer periphery of the support body without causing any voids such as bubble or pores along the optical waveguide. As the insulation layer is integrally formed on the outer periphery of the support body in a condition where the optical waveguide has been united with the support body after wound onto the outer periphery of the support body, the molding process of the insulation layer can be carried out in a simple manner without causing undesired local bends of the optical waveguide. Thus, the occurrence of micro-bend can be avoided to prevent decrease of the light transmission amount.

In the insulator device, it is to be noted that the optical waveguide is adhered to the outer periphery of support body after spirally wound from the central portion of the support body toward the opposite ends of the support body mutually in a reverse direction. During the winding process of the optical waveguide, the optical waveguide is wound around the support body in a condition where the optical waveguide has been fixed at its opposite ends to the mounting flanges and clamped to the support body at its central portion. Thus, the length of the optical waveguide is determined taking into account moderation of the intensity of electric field, and the optical waveguide can be wound onto the support body from its one end to its other end at a predetermined angle and at a predetermined pitch. This is useful to eliminate a difference in light transmission characteristic of the device and is also useful to facilitate control of the gradient of the optical waveguide relative to the axis line of the support body.

In the insulator device according to the present invention, the optical waveguide may be wound onto the outer periphery of the support body in one direction or in mutually in a reverse direction as described above. The opposite end portions of the optical waveguide are extended outwardly in a liquid-tight manner through a pair of mounting flanges fixed to the opposite ends of the support body.

In the insulator device, it is preferable that the gradient angle of the optical waveguide is determined on a basis of a ratio between a maximum intensity of electric field of voltage constantly applied to the optical waveguide and a minimum intensity of electric field resistible in a predetermined period of time. This is useful to make the intensity of permissible electric field of the optical waveguide correspond with the insulation strength of the support body so that the durability of the insulator device becomes substantially the same as that of the support body. It is also preferable that the winding tension of the optical waveguide is determined in a value of 0-200 g to reduce micro-bend of the optical waveguide. This is useful to eliminate leakage of light from the optical waveguide in the insulator device.

In a practical embodiment of the present invention, it is desirable that at least two optical waveguides are used for transmitting measurement information from the high-voltage side to the measurement side. In such a case, the optical waveguides are retained in parallel with a predetermined space and adhered to the outer periphery of the support body in a condition where they have been completely enveloped by an adhesive agent layer. This is useful to avoid the occurrence of cracks in the adhesive agent layer caused by thermal impacts and mechanical impacts applied thereto. For adhesion of the optical waveguides, an adhesive agent hardened at a room temperature or more than the room temperature may be used as the adhesive agent.

Preferably, the optical waveguides are aligned in parallel and retained in place by means of a fixing element adhered to the outer periphery of the support body. In this case, the fixing element is formed at its thrust surface with parallel grooves for engagement with the optical waveguides. With the fixing element, adhesiveness of the optical waveguides to the outer periphery of the support body is enhanced to prevent the occurrence of micro-bend of the optical waveguides and voids and cracks along the optical waveguides.

In the insulator device according to the present invention, optical fibers or core wires of optical fiber are used as the optical waveguides. In use of the optical fibers or core wires of optical fiber, it is desirable to treat each outer layer of the optical fibers or core wires for facilitating adhesiveness to an adhesive agent. In the case that the outer layer is formed of polyamide resin, it is preferable that the outer layer is treated with glow discharge, corona discharge, ozone treatment, acid-treatment or alkali-treatment. In the case that the outer layer is made of fluorine resin, it is preferable to substitute a portion of the fluorine for hydroxiyl group or carboxyle group.

In the insulator device, the mounting flange is composed of a cylindrical portion of predetermined length, an outward annular flange portion integrally formed on one end of the cylindrical portion, and the optical waveguides are wound in an annular groove formed in the cylindrical portion of the mounting flange and extended outwardly from the mounting flange. The annular groove of the mounting flange is useful to absorb looseness of the optical waveguides for determining the length of the optical waveguides taking into account moderation of the intensity of electric field and for winding the optical waveguides at a predetermined gradient angle and a predetermined pitch. Thus, the optical waveguides can be wound onto the support body without any difference in length to ensure the light transmission characteristic of the insulator device. In addition, the annular groove of the mounting flange is useful to enlarge the bending diameter of the optical waveguides for enhancing the light
transmission characteristic of the insulator device.

In the mounting flange, it is preferable that the annular groove is formed between an inside annular wall portion and an outside annular wall portion longer in axial length than the inside annular wall portion. This is useful to moderate the electric field of the optical waveguides at the annular groove so as to prevent the occurrence of corona discharge caused by deterioration of the quality. In the case that the annular groove of the mounting flange is filled with elastic material, it is able to prevent separation of the optical waveguides from the inside annular wall portion caused by thermal contraction so as to protect the optical waveguides in a long period of time.

In the insulator device, the mounting plug comprises a first cylindrical thrust member, a first cylindrical support member threadedly coupled with the first cylindrical thrust member to be moved forward or backward, a second support member coupled within the first cylindrical support member, an elastic clamp element coupled within the first cylindrical support member and coupled with the second support member, and a second thrust member coupled within the first cylindrical support member and engaged with the first thrust member to press the clamp element toward the second support member when the first thrust member is fastened to the first support member, wherein the clamp element is deformed by fastening of the first thrust member and pressed into contact with the optical waveguide passing therethrough. The mounting plug is useful to support the optical waveguide in a liquid-tight manner at the opposite ends of the support body.

At a portion where the optical waveguide is passed through the component parts of the mounting plug, it is desirable that a metallic pipe of small diameter is coupled with the optical waveguide through a cylindrical seal member such that the clamp element is pressed into contact with the metallic pipe to seal the component parts of the mounting plug. In this case, the optical waveguide may be composed of a core wire of glass fiber covered with an intermediate layer of elastic synthetic material and an outer layer formed on the intermediate layer.

In a manufacturing method of the insulator device, the opposite end portions of the optical waveguide are fixed to the mounting flanges coupled with the opposite ends of the support body when the optical waveguide is wound onto the outer periphery of the support body, and the optical waveguide is spirally wound onto the outer periphery of the support body mutually in a reverse direction in a condition where a central portion of the optical waveguide was clamped to the support body and adhered to the outer periphery of the support body. Thereafter, an outer insulation layer is integrally formed on the outer periphery of the support body to envelope the optical waveguide therein.

### Brief description of the drawings

Fig. 1 is a side view of an organic insulator device with optical waveguides contained therein in accordance with the present invention;
Fig. 2 is a sectional view of the insulator device with optical waveguides contained therein;
Fig. 3 is a partly broken side view of a mounting flange of the insulator device;
Fig. 4 is a front view of the mounting flange depicted in a direction shown by an arrow A in Fig. 3;
Fig. 5 is a side view of the mounting flange depicted in a direction shown by an arrow B in Fig. 3;
Fig. 6 is a sectional view of an outwardly extended portion of the optical waveguide in the insulator device;
Fig. 7 is a sectional view of a mounting plug for the optical waveguide;
Fig. 8 (a) is a plan view of the mounting plug;

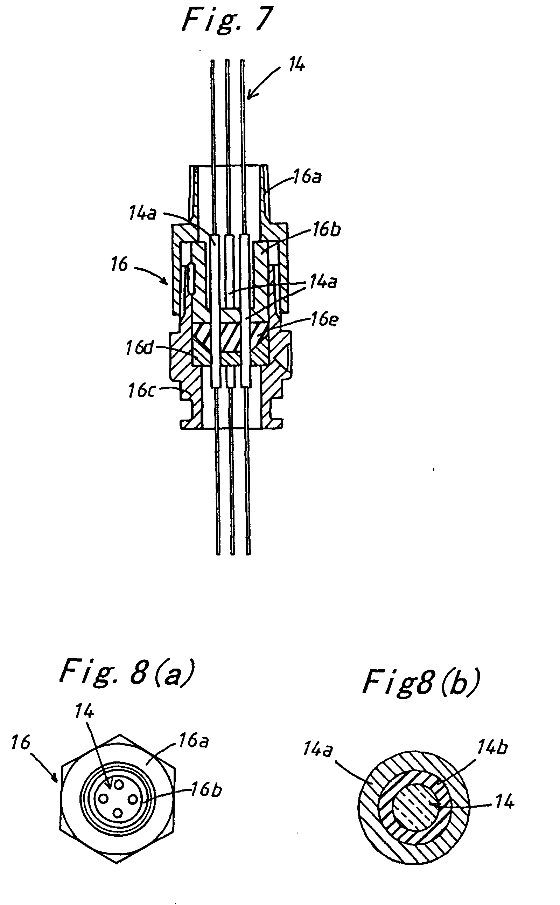

Fig. 8 (b( is a cross-sectional view of the mounting plug at a clamp portion of the optical waveguide;

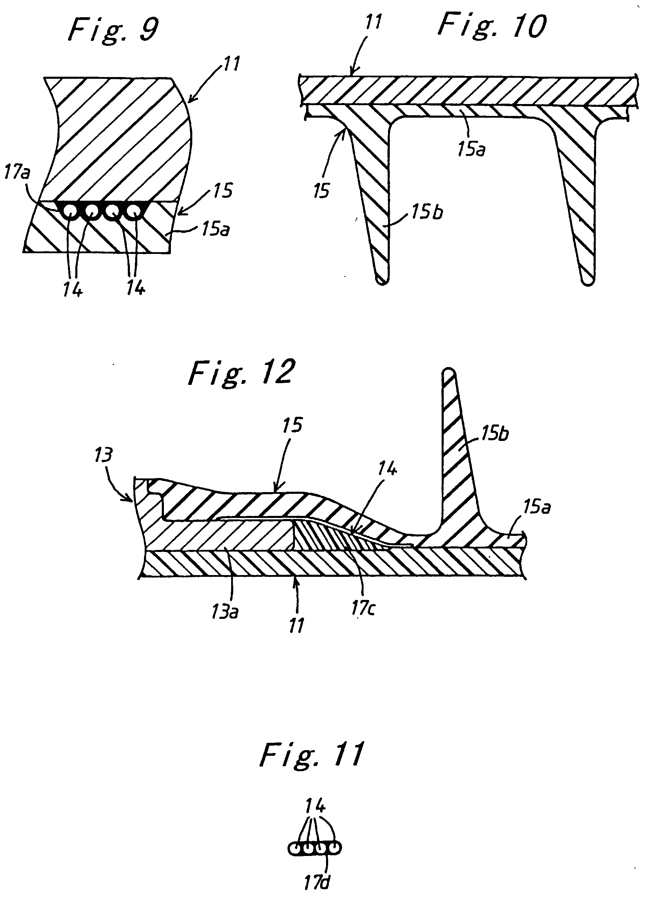

Fig. 9 is a sectional view illustrating the optical waveguides adhered to a support body;
Fig. 10 is a sectional view illustrating an outer insulation layer adhered to the support body;

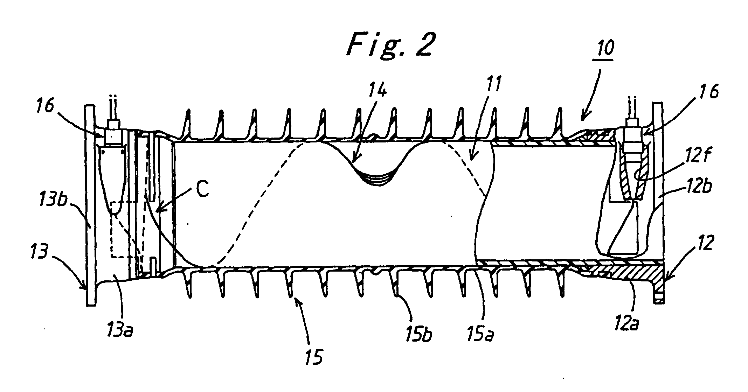

Fig. 11 is a sectional view of a portion of the insulator device shown by an arrow C in Fig. 2;
Fig. 12 is a sectional view illustrating a modification of the optical waveguides;

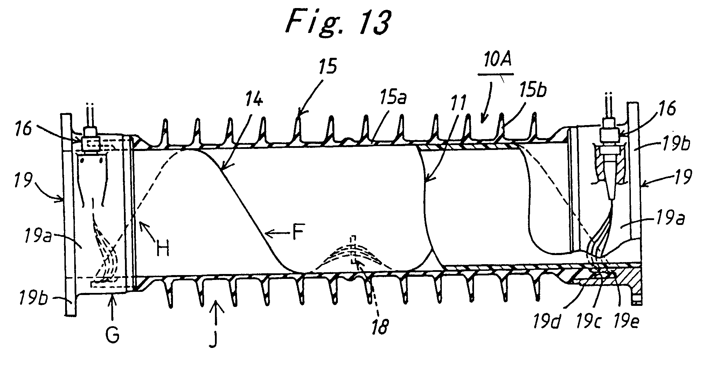

Fig. 13 is a partly broken side of another embodiment of the insulator device;

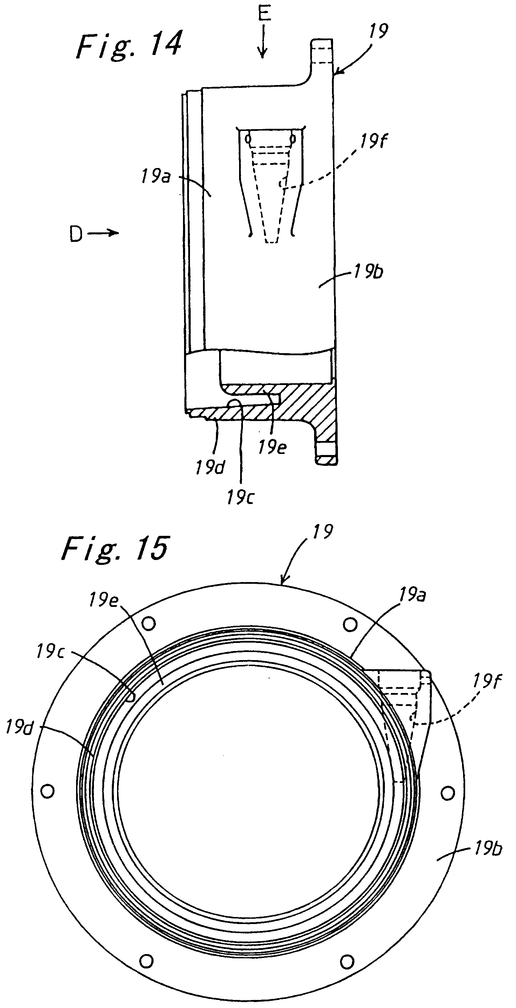

Fig. 14 is a partly broken side view of a mounting flange in the embodiment;
Fig. 15 is a front view of the mounting flange in a direction shown by an arrow D in Fig. 14;

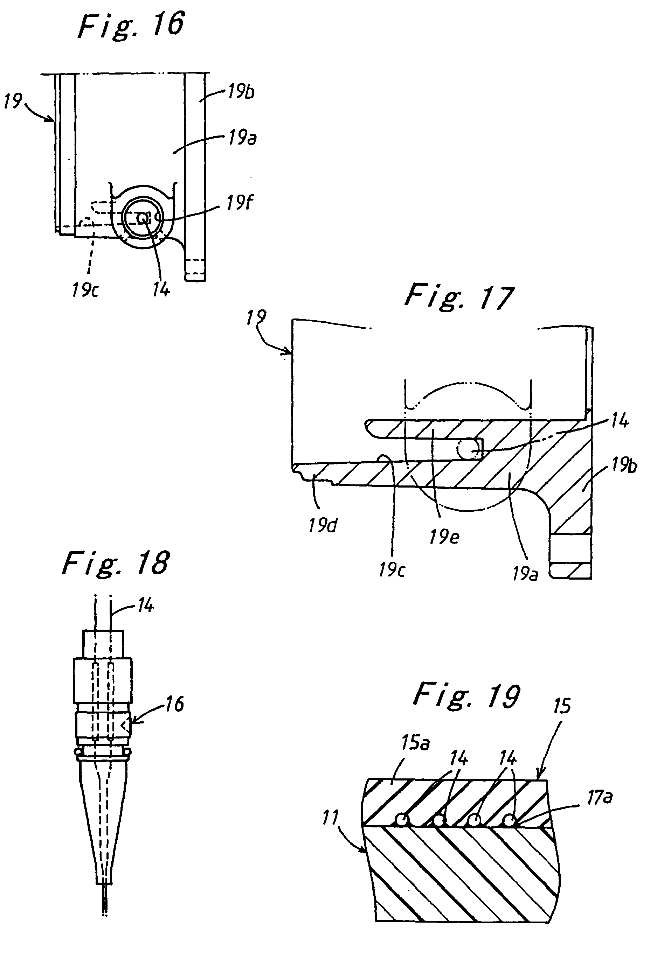

Fig. 16 is a plan view of the mounting flange in a direction shown by an arrow E in Fig. 14;
Fig. 17 is a partly enlarged sectional view of the mounting flange;
Fig. 18 is a front view of an outwardly extended portion of optical waveguides in the embodiment;
Fig. 19 is a partly enlarged sectional view of a portion of the insulator device shown by an arrow F in Fig. 13;

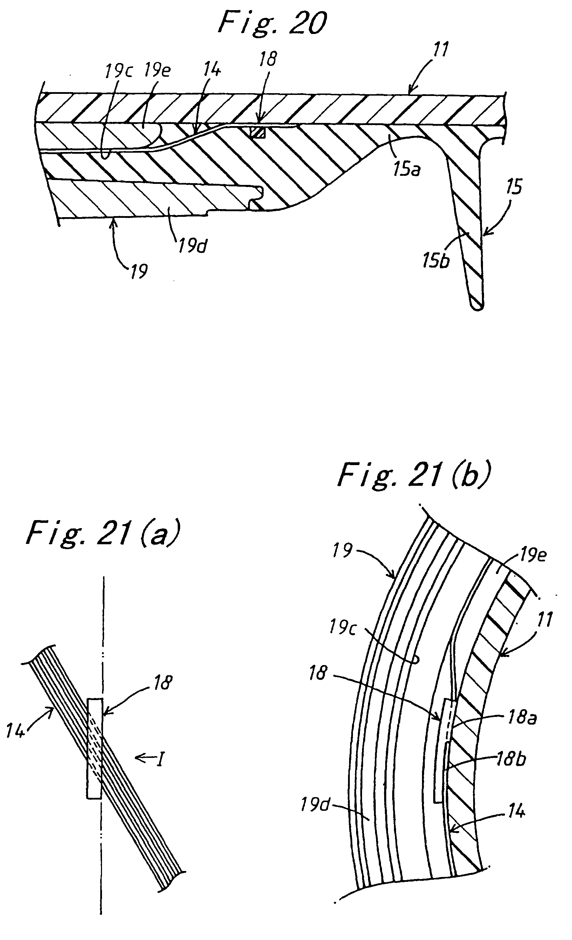

Fig. 20 is a partly enlarged sectional view of a portion of the insulator device shown by an arrow G in Fig. 13;
Fig. 21 (a) is a partly enlarged plan view illustrating a fixed condition of the optical waveguides at a portion shown by an arrow H in Fig. 13;
Fig. 21 (b) is a front view of a portion shown by an arrow I in Fig. 21 (a);

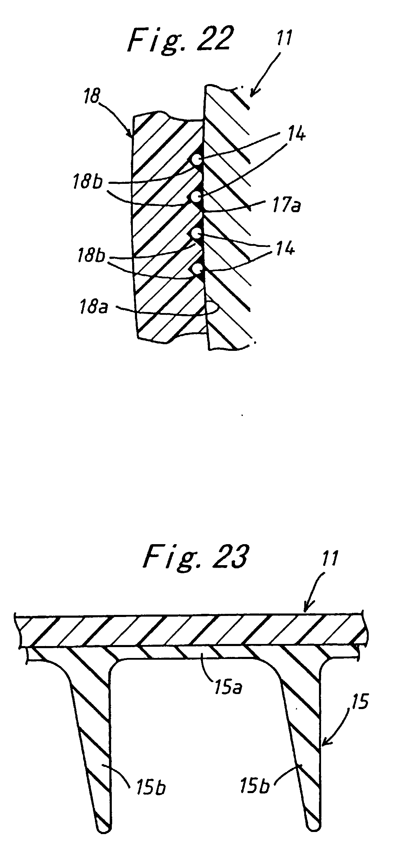

Fig. 22 is a partly enlarged vertical sectional view of the fixed portion of the optical waveguides; and
Fig. 23 is a partly enlarged sectional view of a portion of the insulator device shown by an arrow J in Fig. 13.

### Preferred embodiments of the Invention

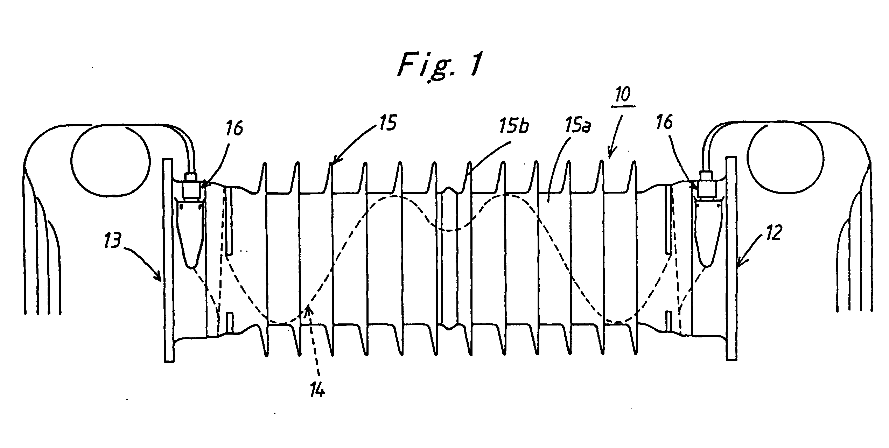

Hereinafter, the present invention will be described with reference to the drawings. Illustrated in Figs. 1 and 2 is an embodiment of an organic insulator device with optical waveguides contained therein in accordance with the present invention. The insulator device is provided at one end thereof with a mounting flange for attachment to a detection equipment for detecting information at high-voltage potential side and at the other end thereof with a mounting flange for attachment to a measurement equipment for measuring the information detected at the high-voltage potential side.

The insulator device 10 comprises a cylindrical support body 11, mounting flanges 12, 13 coupled with opposite end of the support body 11, a plurality of optical waveguides 14 wound onto an outer periphery of the support body 11, and an outer insulation layer 15 formed to envelope the whole outer periphery of the support body 11. In the insulator device 10, four optical fibers are used as the optical waveguides 14. The optical waveguides each are composed of a core wire of optical glass-fiber covered with an outer layer of synthetic resin.

The support body 11 is in the form of an electric insulation body of fiber-reinforced plastic formed in a predetermined length. The length of support body 11 is determined on a basis of an effective insulation distance defined by the rate of applied voltage. The mounting flanges 12, 13 each are made of metal and coupled with the opposite ends of support body 11.

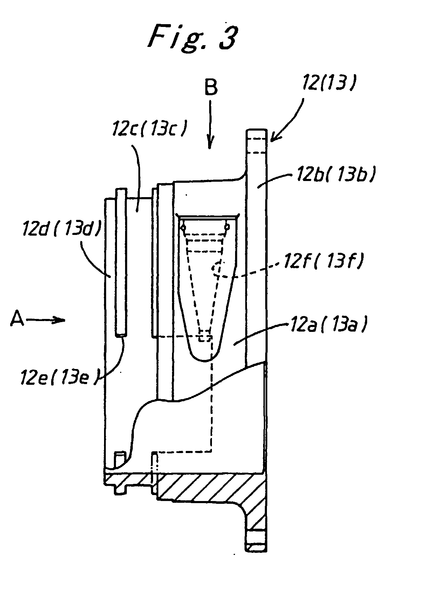

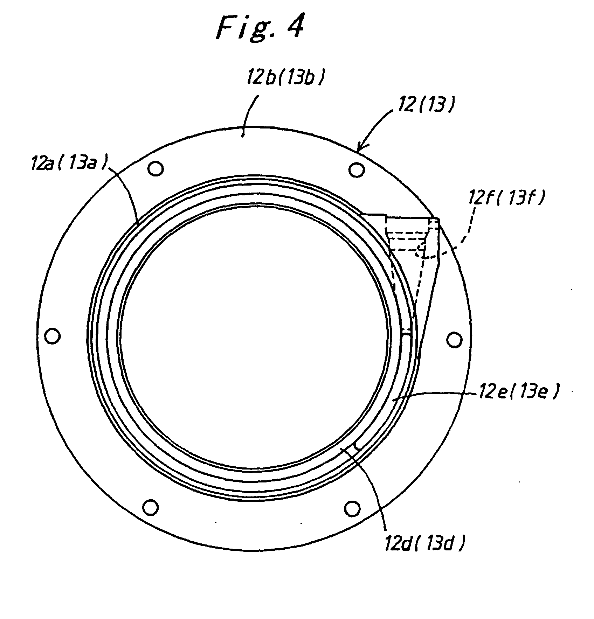

As shown in Figs. 1 to 5, the mounting flanges 12, 13 are composed of cylindrical bodies 12a, 13a formed with outward flange portions 12b, 13, respectively. The cylindrical bodies 12a, 13a are also formed at their inside portions with annular recesses 12c, 12d; 13c, 13d, respectively. The annular recesses 12c, 12d and 13c, 13d are communicated to one another through lateral recesses 12e, 13e, respectively. The cylindrical bodies 12a, 13a are formed at their base portions with conical holes 12f, 13f respectively for mounting the optical waveguides 14.

As shown in Figs. 1, 2 and 6 to 8, the optical waveguides 14 in the insulator device 10 are fixed at their opposite ends to mounting plugs 16 which are coupled within the mounting holes 12f, 13f of flanges 12, 13 so that the optical waveguides 14 are fixed at the opposite ends of support body 11 and wound onto the outer periphery of support body 11. The optical waveguides 14 each may be replaced with a core wire of optical glass-fiber the outer periphery of which is covered with an intermediate layer of elastic material such as silicon rubber and further covered with an outer layer of polyamide resin.

In use of the optical waveguides of optical fiber or the core wire of optical glass-fiber, it is desirable to treat the outer layers of optical waveguides for facilitating adhesiveness of an adhesive agent. In the case that the outer layer is formed of polyamide resin, it is preferable that the outer layer is treated with glow discharge, corona discharge, ozone treatment, acid-treatment or alkali-treatment. In the case that the outer layer is formed of fluorine resin, it is preferable that the outer layer is treated with etching treatment.

The optical waveguides 14 are spirally wound onto the outer periphery of support body 11 mutually in a reverse direction in a condition where the optical waveguides 14 are fixed at their opposite ends to the support body 11 by means of the mounting plugs 16 and clamped at their central portions to the support body 11. The optical waveguides 14 are preliminarily coated with an adhesive agent at their outer peripheries. When spirally wound onto the outer periphery of support body 11, the optical waveguides 14 are retained in parallel with a predetermined space and adhered to the outer periphery of support body 11 through an adhesive layer 17a as shown in Fig. 9. In the insulator device 10, the optical waveguides 14 are spaced to one another in a distance of about 1mm.

The used adhesive agent is preferably a thermosetting adhesive agent such as epoxy resin superior in affinity to the support body 11 of reinforced plastic, and it is preferable that any separation does not occur due to stress in thermal expansion and vibration. Particularly, it is preferable to use an adhesive agent the characteristics of which are less than 200 x 10⁻⁶ in thermal expansion coefficient, less than 500 kgf/mm² in resiliency and more than 100 kgf/cm² in shearing strength. An adhesive agent hardened at a room temperature or more than the room temperature may be used as the epoxy resin adhesive agent.

The length of the optical waveguides 14 is determined in such a manner as to sufficiently moderate the intensity of the electric field of the optical waveguides 14, and the gradient angle of the optical waveguides 14 in a spirally wound condition is determined on a basis of a ratio of a maximum intensity of the electric field of voltage constantly applied to the waveguides to a minimum intensity of the electric field resistible in a predetermined period of time. As the intensity of the electric field at the central portion of the optical waveguides 14 becomes lower at the high-voltage side in an alternate current equipment, the gradient of moderation of the electric field is permitted to partly reduce.

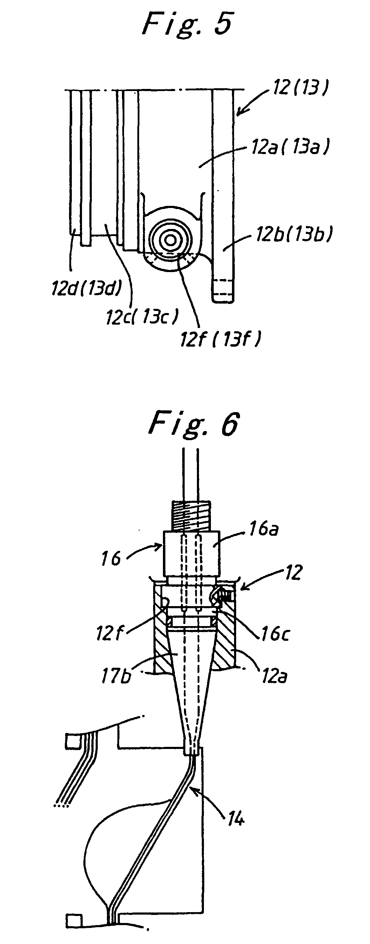

The winding tension of optical waveguides 14 is determined in a value of 0 - 200g to avoid loss of micro-bending caused by a difference in thermal expansion between the support body 11 and optical waveguides 14 when applied with a temperature stress. As shown in Figs. 6 to 8, the mounting plug 16 connected to each end of the optical waveguides 14 is composed of a first thrust member 16a, a second thrust member 16b, a first support member 16c, a second support member 16d and a clamp element 16e. The thrust members 16a, 16b and support members 16c, 16d are made of metal, while the clamp element 16e is made of an elastic material such synthetic rubber or elastic synthetic resin.

As shown in Fig. 7, the first thrust member 16a of the mounting plug 16 is in the form of a stepped cylindrical body having large and small diameter portions. The large diameter portion of first thrust member 16a is formed at its inner periphery with a threaded portion. The first support member 16c is in the form of a stepped cylindrical body having large and small diameter portions. The large diameter portion of support member 16c is formed at its outer periphery with a threaded portion. The first thrust member 16a is coupled at its threaded portion with the threaded portion of first support member 16c to be moved forward or backward. The second thrust member 16b of the mounting plug 16 is in the form of a bottomed cylindrical body, the second support member 16d is in the form of a cylindrical body formed with a conical recess, and the clamp element 16e is in the form of a columnar body formed with a conical protrusion. These component parts 16b-16e are formed with through holes for permitting the optical waveguides 14 passing therethrough.

In a condition where the optical waveguides 14 have been passed through all the component parts 16a-16e, the second support member 16d is coupled within the first support member 16c, the clamp element 16e is coupled with the second support member 16d, and the second thrust member 16b is coupled with the first support member 16c through a seal member. In such a condition, the first thrust member 16a is coupled over the first support member 16c. At a portion where the optical waveguides 14 are passed through the component parts 16c-16e, a metallic pipe 14a of small diameter is coupled with the optical waveguides 14 respectively through a cylindrical seal member 14b as shown in Fig. 8 (b).

When the first thrust member 16a is coupled with the first support member 16c at their threaded portions, the second thrust member 16b is pressed in an axial direction by engagement with an internal stepped portion of first thrust member 16a, and the clamp element 16e is pressed by engagement with the second thrust member 16b toward the second support member 16d. Thus, the clamp element 16e is radially inwardly compressed by engagement with the second support member 16d and pressed into contact with the metallic pipes 14a.

As shown in Fig. 6, the mounting plugs 16 each are coupled within the mounting hole 12f of the respective mounting flanges 12, 13 and secured in place with a conical bumper element 17b of silicon rubber filled in the mounting hole 12f. In such a mounting condition, the optical waveguides 14 are spirally wound onto the outer periphery of support body 11 as described above and extended toward the exterior respectively through the first annular recesses 12c, 13c, lateral recesses 12e, 13e and second annular recesses 12d, 13d of the mounting flanges 12, 13. Although in the insulator device 10, the plural optical waveguides 14 are spaced in a predetermined distance as shown in Fig. 9, the optical waveguides 14 may be used in a condition where they are united by a tape 17 wound thereon as shown in Fig. 12. Alternatively, the optical waveguides 14 may be used in a condition where they are embedded in synthetic resin and covered with an outer layer.

As shown in Figs. 1 and 10, the outer insulation layer 15 is made of silicon rubber, which is composed of a cylindrical portion 15a formed to envelope the whole outer periphery of support body 11 and a number of shields 15b radially outwardly protruded from the cylindrical portion 15a. The insulation layer 15 is integrally formed on the outer periphery of support body 11 provided at its opposite ends with the mounting flanges 12 and 13. As shown in Fig. 2, the insulation layer 15 encloses each inner end of the cylindrical portions 12a, 13a of mounting flanges 12, 13, and as shown in Fig. 11, an annular spacer 17c is disposed between each inner end of the cylindrical portions 12a, 13a and the outer periphery of support body 11. The annular spacer 17c is made of the same material as that of support body 11 and adhered by epoxy resin to the outer periphery of support body 11 to form an induction passage of the optical waveguides 14.

The insulator device 10 has the same function as that of a conventional high-voltage insulator. In the insulator device 10, the optical waveguides 14 are completely enveloped by the adhesive agent such as epoxy resin and adhered to the outer periphery of support body 11 through the adhesive agent layer 17a. Thus, the outer insulation layer 15 can be integrally formed on the outer periphery of support body 10 without causing any void along the optical waveguides 14. As the insulation layer 15 is integrally formed on the outer periphery of support body 11 in a condition where the optical waveguides 14 have been united with the support body 11 after wound onto the outer periphery of support body 11, the molding process of the insulation layer 15 can be carried out in a simple manner without causing undesired local bend of the optical waveguides 14. Thus, the occurrence of micro-bend can be avoided to prevent decrease of the light transmission amount.

In the insulator device 10, it is to be noted that the optical waveguides 14 are adhered to the outer periphery of support body 11 after spirally wound from the central portion of support body 11 toward the opposite ends of support body 11 mutually in a reverse direction. During the winding process of optical waveguides 14, the optical waveguides 14 are wound around the support body 11 in a condition where the optical waveguides 14 have been fixed at their opposite ends to the mounting flanges 12 and 13 and clamped to the support body 11 at their central portions. Thus, the length of optical waveguides 14 is determined taking into account moderation of the intensity of electric field, and the optical waveguides 14 can be wound onto the support body 11 from its one end to its other end at a predetermined gradient angle and at a predetermined pitch. This is useful to eliminate a difference in light transmission characteristics of the device and is also useful to facilitate control of the gradient of the optical waveguides 14 relative to the axis of the support body 11.

In the insulator device 10, the gradient angle of the optical waveguides 14 is determined on a basis of a ratio between a maximum intensity of electric field of voltage constantly applied to the optical waveguides 14 and a minimum intensity of electric field resistible in a predetermined period of time. This is useful to make the intensity of permissible electric field of the optical waveguides 14 correspond with the insulation strength of support body 11 so that the durability of the insulator device 10 becomes substantially the same as that of support body 11. In addition, the winding tension of optical waveguides 14 is determined in a value of 0 - 200 g to reduce micro-bend of the optical waveguides 14. This is useful to eliminate leakage of light from the optical waveguides 14 in the insulator device.

In the insulator device 10, the optical waveguides 14 have been securely adhered to the outer periphery of support body 11 in a condition where they were completely enveloped by the adhesive agent. Thus, the molding process of insulation layer 15 can be carried out without causing any change in the winding condition of optical waveguides 14. This is useful to ensure good light transmission characteristics of the optical waveguides 14. As the support body 11 and optical waveguides 14 are retained in the same thermal condition, a difference in thermal expansion between the support body 11 and optical waveguides 14 is reduced to enhance the temperature characteristic of the insulator device.

In the insulator device 10, the plural optical waveguides 14 have been retained in parallel with a predetermined space and adhered to the outer periphery of support body 11 in a condition where they have been completely enveloped by the adhesive agent. This is useful to avoid the occurrence of cracks in the adhesive agent layer caused by thermal impacts and mechanical impacts applied thereto.

In the insulator device 10, the optical waveguides have been extended outwardly from the support body 11 in a condition where they were clamped by the mounting plugs 16 at the opposite ends of support body 11 in a liquid-tight manner. This is useful to effectively prevent entry of water through the component parts of optical waveguides 14 and mounting plugs 16. In addition, the first annular recesses 12c, 13c formed in the mounting flanges 12, 13 can be used as spaces for containing therein each end portion of the optical waveguides 14 wound onto the outer periphery of support body 11. The annular recesses 12c, 13c are also useful to absorb looseness of the optical waveguides 14 and to uniform the effective length of the respective optical waveguides 14. The spacer 17 disposed between the support body 11 and each inner end of the mounting flanges 12, 13 is useful to form an induction passage of the optical waveguides 14 and to prevent the optical waveguides 14 from damage at the stepped portion on support body 11.

In the insulator device 10, the mounting plugs 16 can be coupled in s simple manner within the mounting holes 12f, 13f formed in the mounting flanges 12, 13 to extend therethrough the optical waveguides 14 outwardly from the support body 11. In the mounting plug 16, the clamp element 16e is deformed by fastening of the first thrust member 16a and pressed into contact with the metallic pipes 14a enclosing the optical waveguides 14 to support the optical waveguides 14 in a liquid-tight manner.

Illustrated in Fig. 13 is another embodiment of the organic insulator device according to the present invention. An insulator device 10A in this embodiment has substantially the same construction as that of the insulator device 10 shown in Figs. 1 and 2. The insulator device 10A is different from the insulator device 10 mainly in construction of its mounting flanges and provision of a fixing element for the optical waveguides 14. In the following description, the same component parts and portions as those of the insulator device 10 are designated by the same reference numerals.

As shown in Figs. 13 to 17, a pair of mounting flanges 19 adapted to the insulator device 10A each composed of a cylindrical base body 19a formed with an outward annular flange portion 19b. The cylindrical base body 19a is formed in its peripheral wall with annular groove 19c located in an axial direction . The annular groove 19c is formed between an inside annular wall portion 19e and an outside annular wall portion 19d longer in the axial length than the former wall portion 19e. The cylindrical base body 19a is formed at its peripheral wall with a conical mounting hole 19f. In a condition where the mounting plugs 16 are coupled within each mounting hole 19f of mounting flanges 19, the optical waveguides 14 are retained by the mounting plugs 16 at their opposite end portions as shown in Fig. 18 and spirally wound onto the outer periphery of support body 11. In each annular groove 19c of the mounting flanges 19, the optical waveguide 14 are wound in parallel onto the inside annular wall portion 19e in such a manner as to absorb looseness of the optical waveguides 14. As shown in Figs. 20 to 22, the optical waveguides 14 are aligned at the central portion of support body 11 and inside the outside annular wall portion 19e of mounting flange 19 and retained in place by a fixing element 18 at the central portion of support body 11.

The fixing element 18 is made of synthetic resin the thermal expansion coefficient of which is substantially the same as that of support body 11. The fixing element has a thrust surface 18a formed with four v-grooves 18b equally spaced in parallel. The v-grooves 18b are formed to contain the optical waveguides 14 through the adhesive agent layer 17a. The fixing element 18 is adhered to the support body 11 so that the optical waveguides 14 are pressed by the thrust surface 18a of fixing element 18 into contact with the outer peripheral surface of support body 11 and aligned by engagement with the v-grooves 18b.

The insulation layer 15 is formed on the support body 11 in such a manner that the cylindrical portion 15a of layer 15 is extended toward the inner end of outside annular wall portion 19d of mounting flange 19 and filled in the annular groove 19c along the outer periphery of inside annular wall portion 19e to form an induction passage of the optical waveguides 14. In the insulator device 10A, the optical waveguides 14 are wound onto the inside annular wall portion 19e in the annular groove 19c of mounting flange 19 and extended outwardly from the mounting flange 19. Thus, the annular groove 19c of mounting flange 19 is useful to absorb looseness of the optical waveguides 14 for determining the length of optical waveguides 14 taking into account moderation of the intensity of electric field and for winding the optical waveguides at a predetermined gradient angle and a predetermined pitch. As a result, the optical waveguides 14 can be wound onto the support body 11 without causing any difference in length to ensure the light transmission characteristic of the insulator device. In addition, the annular groove 19c of mounting flange 19 is useful to enlarge the bending diameter of optical waveguides 14 for enhancing the light transmission characteristic of the insulator device.

In the mounting flange 19, the outside annular wall portion 19d longer in axial length than the inside annular wall portion 19e is useful to moderate the electric field of optical waveguides 14 at the annular groove 19c for preventing the occurrence of corona discharge caused by deterioration of the quality. In the case that the annular groove 19c of mounting flange 19 is filled with elastic material, it is able to prevent separation of the optical waveguides 14 from the inside annular wall portion 19e caused by thermal contraction.

In the case that a plurality of optical waveguides 14 are spirally wound onto the outer periphery of support body 11 as in the insulator device 10A, the fixing element 18 adhered to the support body 11 is useful to align the optical waveguides 14 in parallel. Thus, the adherence of optical waveguides 14 onto the outer periphery of support body 11 is ensured to avoid the occurrence of micro-bend, voids and cracks at the optical waveguides 14. Even if applied with tension, the optical waveguides 14 are retained in place by support of the fixing element 18 without causing any damage therein.

## Claims

1. An organic insulator device with an optical waveguide contained therein, comprising a cylindrical or columnar support body of reinforced plastic, an optical waveguide arranged along the outer periphery of the support body and extended from one end of the support body to the other end of the support body for connection to a high-voltage side and a measurement side, and an outer insulation layer of elastic material integrally formed on the outer periphery of the support body to envelope the optical waveguide,
characterized in that the optical waveguide is spirally wound onto the support body and adhered to the outer periphery of the support body through an adhesive agent in a condition where the optical waveguide was fully covered with the adhesive agent.

2. An organic insulator device with an optical waveguide contained therein, comprising a cylindrical or columnar support body of reinforced plastic, an optical waveguide arranged along the outer periphery of the support body and extended from one of the support body to the other end of the support body for connection to a high-voltage side and a measurement side, and an outer insulation layer of elastic material integrally formed on the outer periphery of the support body to envelope the optical waveguide,
characterized in that the optical waveguide is spirally wound onto the outer periphery of the support body mutually in a reverse direction in a condition where it is retained at a central portion of the support body and is adhered to the outer periphery of the support body.

3. An organic insulator device as claimed in claim 2, characterized in that the optical waveguide is adhered to the outer periphery of the support body through an adhesive agent in a condition where the optical waveguide was fully covered with the adhesive agent.

4. An organic insulator device as claimed in claim 1 or 2, characterized in that the opposite end portions of the optical waveguide are extended outwardly in a liquid-tight manner through a pair of mounting flanges fixed to the opposite ends of the support body.

5. An organic insulator device as claimed in claim 4, characterized in that the optical waveguide is supported in a liquid-tight manner at its opposite ends by means of a pair of mounting plugs fixedly coupled with the mounting flanges.

6. An organic insulator device as claimed in claim 1 or 2, characterized in that the gradient angle of the optical waveguide relative to an axial line of the support body is determined on a basis of a ratio between a maximum intensity of electric field of voltage constantly applied to the optical waveguide and a minimum intensity of electric field resistible in a predetermined period of time.

7. An organic insulator device as claimed in claim 1 or 2, characterized in that the winding tension of the optical waveguide is in a value of 0 - 200 g.

8. An organic insulator device as claimed in claim 1 or 2, characterized in that a plurality of optical waveguides are arranged in parallel.

9. An organic insulator device as claimed in claim1 or 2, characterized in that a plurality of optical waveguides are adhered to the outer periphery of the support body in a condition where they are spaced in a predetermined distance to one another and retained in place.

10. An organic insulator device as claimed in claim 1 or 2, characterized in that a plurality of optical waveguides are aligned in place by means of fixing element adhered to the outer periphery of the support body and spirally wound in parallel onto the outer periphery of the support body.

11. An organic insulator device as claimed in claim 10, characterized in that the fixing element has a thrust surface formed with a plurality of parallel grooves coupled with the optical waveguides for alignment thereof.

12. An organic insulator device as claimed in claim 1 or 2, characterized in that an optical fiber or a core wire of optical fiber is used as the optical waveguide.

13. An organic insulator device as claimed in claim 12, characterized in that an outer surface of the optical fiber or core wire is treated to facilitate adherence to the outer periphery of the support body.

14. An organic insulator device as claimed in claim 1 or 2, characterized in that the adhesive agent is a thermosetting adhesive agent such as epoxy resin.

15. An organic insulator device as claimed in claim 5, characterized in that the mounting flange comprises a cylindrical portion of predetermined length, an outward annular flange portion integrally formed on one end of the cylindrical portion and that the optical waveguide is contained and wound in an annular groove formed in the cylindrical portion of the mounting flange and extended outwardly from the mounting flange.

16. An organic insulator device as claimed in claim 15, characterized in that the annular groove of the mounting flange is formed between an inside annular wall portion and an outside annular wall portion longer in axial length than the inside annular wall portion.

17. An organic insulator device as claimed in claim 5, characterized in that the mounting plug comprises a first cylindrical thrust member, a first cylindrical support member threadedly coupled with the first cylindrical thrust member to be moved forward or backward, a second support member coupled within the first cylindrical support member, an elastic clamp element coupled within the first cylindrical support member and coupled with the second support member, and a second thrust member coupled within the first cylindrical support member and engaged with the first thrust member to press the clamp element toward the second support ember when the first thrust member is fastened to the first support member, wherein the clamp element is deformed by fastening of the first thrust member and pressed into contact with the optical waveguide passing therethrough.

18. A manufacturing method of the organic insulator device claimed in claim 2, comprising the steps of:
fixing the opposite end portions of the optical waveguide to the mounting flanges coupled with the opposite ends of the support body when the optical waveguide is wound onto the outer periphery of the support body;
winding the optical waveguide onto the outer periphery of the support body mutually in a reverse direction in a condition where a central portion of the optical waveguide was clamped to the support body and adhering the optical waveguide to the outer periphery of the support body; and
forming an outer insulation layer on the outer periphery of the support body to envelope the optical waveguide therein.
